# EUROPEAN PATENT SPECIFICATION

(11) **EP 2 706 204 B1**
(45) Date of publication and mention of the grant of the patent: **08.03.2017**
(21) Application number: 13166809.7
(22) Date of filing: 07.05.2013
(51) Int. Cl.: F01M 5/00, F01M 13/04

(54) **Saddle-riding vehicle**
Kraftrad
Véhicule à selle

(30) Priority: 11.09.2012 JP 2012199096
(43) Date of publication of application: 12.03.2014
(73) Proprietor: Yamaha Hatsudoki Kabushiki Kaisha, Iwata-shi, Shizuoka-ken 438 (JP)
(72) Inventor: Tabata, Norihito, Shizuoka, 4388501 (JP)
(74) Representative: Zimmermann, Tankred Klaus

(56) References cited:
- WO-A1-2009/157455
- JP-A- H08 216 955
- JP-A- 2000 337 125
- JP-A- 2007 146 772
- JP-A- 2009 030 580
- JP-A- 2010 196 638
- JP-U- S62 188 509

## Description

### Technical Field

The present invention relates to a saddle-riding vehicle.

### Background Art

In recent years, alcohol-containing fuels have been increasingly used as fuels for saddle-riding vehicles. When such alcohol-containing fuel is used in a saddle-riding vehicle, a phenomenon can occur that alcohol flows through a space between a cylinder and a piston without being burnt and is mixed with the oil contained within a crankcase. In this case, when the oil temperature increases, blow-by gas containing evaporated alcohol and lubricating oil is transmitted to an intake path connected to an engine.

Now, unlike gasoline, alcohol has a small range of a boiling point. For example, the boiling point of ethanol is roughly 78 degrees Celsius to roughly 80 degrees Celsius, whereas the boiling point of gasoline is roughly 30 degrees Celsius to roughly 200 degrees Celsius. Therefore, when the oil temperature increases and reaches the boiling point of alcohol, the alcohol contained in the oil evaporates and expands all at once. When such large amount of evaporated alcohol is again transmitted all at once to the cylinder through the intake path, chances are that the air-fuel ratio of a mixture gas to be supplied deviates from an appropriate value. Therefore, for inhibiting deviation of the air-fuel ratio, it is required to liquefy and separate a part of the large amount of evaporated alcohol together with the lubricating oil.

However, alcohol is less easily liquefied within the separation device when the temperature of the separation device is high. Thus, it is difficult to sufficiently separate alcohol from the blow-by gas. In view of the above, a motorcycle described in Japan Laid-open Patent Application Publication No. JP-A-2011-117339 includes a structure that at least a portion of the separation device is disposed forwards of the cylinder, without being overlapped with the cylinder in a plan view.

JP 08-216955 A describes an arrangement structure of a cooler for a motorcycle which is so constituted as to improve maintainability of an engine and prevent the occurrence of irregular combustion. In a motorcycle having an oil cooler arranged, as seen from the side of a vehicle, to the front side of a cylinder head part and dispersing the heat of oil to cool the interior of an engine in the atmosphere, a cam chain chamber is formed at the right side wall of the cylinder head part and spark plugs are attached, as seen from the back of a vehicle, to the cylinder head part on the opposite side to the cam chain chamber with a cylinder central line nipped therebetween. The oil cooler is arranged, as seen from the back of a vehicle, in such a state to be deviated to the cam chain chamber side from the cylinder central line.

### SUMMARY OF INVENTION

It is an object of the present invention to provide a saddle-riding vehicle whereby alcohol contained in the blow-by gas can be effectively liquefied and separated in the separation device while maintenance performance can be enhanced.

This object is achieved by a saddle-riding vehicle according to claim 1.

From the perspective of promoting liquefaction and separation of alcohol in the separation device, the motorcycle described in the Publication No. JP-A-2011-117339 includes a structure that the separation device is disposed in a position where it is less affected by the heat of the engine as described above. Therefore, alcohol contained in the blow-by gas is effectively liquefied and separated in the separation device and is then accumulated therein. Then, liquid alcohol contained within the separation device gradually evaporates and is transmitted to the intake path little by little.

However, alcohol evaporation is not promoted when the temperature of the separation device is low. Therefore, the amount of remaining liquid alcohol is increased as liquefaction and separation of alcohol are advanced. In this case, maintenance is frequently required for processing such liquid alcohol, and this makes maintenance complicated.

A saddle-riding vehicle according to a first aspect includes an engine, an oil cooler, an intake path, a blow-by gas path and a separation device. The oil cooler is disposed forwards of the engine in a side view. The intake path is connected to the engine. The blow-by gas path connects the engine and the intake path. The separation device is disposed in the blow-by gas path. The separation device is positioned laterally on one side of a vehicle center line extended in a back-and-forth direction. At least a portion of the oil cooler is positioned on the same side as the separation device with respect to the vehicle center line. At least a portion of the separation device is disposed in such a position that at least a portion of the separation device is overlapped with the engine in the back-and-forth direction in a side view. At least a portion of the separation device is positioned above the engine in a side view.

A saddle-riding vehicle according to a second aspect relates to the saddle-riding vehicle according to the first aspect, and wherein the engine includes a crankcase and a cylinder disposed above the crankcase. At least a portion of the separation device is positioned above the cylinder in a side view.

A saddle-riding vehicle according to a third aspect relates to the saddle-riding vehicle according to the first or second aspect, and wherein at least a portion of the separation device is disposed in such a position that at least a portion of the separation device is overlapped with the oil cooler in a side view.

A saddle-riding vehicle according to a fourth aspect relates to the saddle-riding vehicle according to the third aspect, and wherein the separation device includes a recessed portion. A portion of the oil cooler is in opposition to the recessed portion.

A saddle-riding vehicle according to a fifth aspect relates to the saddle-riding vehicle according to any of the first to fourth aspects, and further includes a shroud for directing a travelling wind towards the engine. The oil cooler and the separation device are disposed in such positions that the oil cooler and the separation device are overlapped with the shroud in a side view.

A saddle-riding vehicle according to a sixth aspect relates to the saddle-riding vehicle according to any of the first to fourth aspects, and further includes a right shroud and a left shroud. The right and left shrouds are disposed away from each other in a vehicle width direction. The right and left shrouds direct a travelling wind towards the engine. The oil cooler and the separation device are disposed between the right shroud and the left shroud in the vehicle width direction.

A saddle-riding vehicle according to a seventh aspect relates to the saddle-riding vehicle according to any of the first to sixth aspects, and wherein at least a portion of the separation device is disposed in such a position that at least a portion of the separation device is overlapped with the engine in a top view.

A saddle-riding vehicle according to an eighth aspect relates to the saddle-riding vehicle according to any of the first to seventh aspects, and wherein the blow-by gas path is disposed vehicle-width-directionally across the vehicle center line in a top view.

A saddle-riding vehicle according to a ninth aspect relates to the saddle-riding vehicle according to any of the first to eighth aspects, and wherein the intake path includes an air cleaner. The blow-by gas path includes a first blow-by gas path and a second blow-by gas path. The first blow-by gas path connects the engine and the separation device. The second blow-by gas path connects the separation device and the air cleaner.

A saddle-riding vehicle according to a tenth aspect relates to the saddle-riding vehicle according to the ninth aspect, and wherein the second blow-by gas path is connected to the separation device at a first connection portion while being connected to the air cleaner at a second connection portion. The first connection portion is positioned laterally on one side of the vehicle center line. The second connection portion is positioned laterally on the other side of the vehicle center line.

### Advantageous Effects of Invention

In the saddle-riding vehicle according to the first aspect, at least a portion of the oil cooler is positioned on the same side as the separation device with reference to the vehicle center line. Further, in a side view, at least a portion of the separation device is disposed in such a position that it is overlapped with the engine in the back-and-forth direction, while being positioned above the engine. The temperature of the separation device in such position is lower than that of the inside of the engine. Therefore, when alcohol contained inside the engine evaporates all at once when it comes to a temperature that the alcohol evaporates, the temperature of the separation device disposed outside the engine is lower than the temperature that alcohol evaporates. Therefore, the alcohol contained in the blow-by gas is effectively condensed in the separation device.

Further, when the operating time of the engine is increased, the temperature of the engine and that of the oil cooler go up and reach a temperature closer to the boiling point of alcohol. In this case, the amount of engine oil mixed with alcohol is remarkably greater than that of alcohol in the inside of the engine. Therefore, a large amount of heat exceeding the latent heat in evaporation of alcohol is applied to alcohol from the engine oil. Accordingly, the temperature of alcohol acutely goes up to a temperature beyond the boiling point. Contrarily, the separation device contains a small amount of engine oil mixed with alcohol. Therefore, compared to the case that alcohol is contained inside the engine, the amount of heat to be applied to alcohol is smaller in the separation device. Consequently, even when the temperature of alcohol reaches a temperature closer to the boiling point, the temperature gently goes up by means of the latent heat in evaporation.

Further, in the separation device, the temperature of alcohol varies due to variation in temperature of the blow-by gas and radiation heat from the surrounding components. Therefore, the temperature of alcohol does not acutely vary in the separation device. Yet further, heat is not directly transmitted thereto from a heat source such as the engine, but is indirectly transmitted thereto through a gas. Therefore, the amount of heat changing the temperature of alcohol is not large. Consequently, alcohol contained within the separation device gradually evaporates without acutely boiling. The evaporated alcohol is herein returned to the intake path. Therefore, maintenance is less frequently required for processing liquid alcohol. In other words, a maintenance performance can be enhanced.

In the saddle-riding vehicle according to the second aspect, the separation device is reasonably warmed by the heat from the cylinder. Accordingly, alcohol can be gradually evaporated within the separation device.

In the saddle-riding vehicle according to the third aspect, the separation device is reasonably warmed by the heat from the oil cooler. Accordingly, alcohol can be gradually evaporated within the separation device.

In the saddle-riding vehicle according to the fourth aspect, the oil cooler and the separation device can be compactly disposed. Further, it is possible to increase the area of a portion receiving the heat from the oil cooler in the separation device.

In the saddle-riding vehicle according to the fifth aspect, the heat of the oil cooler flows inside the shroud due to travelling wind. Accordingly, the separation device is reasonably warmed.

In the saddle-riding vehicle according to the sixth aspect, the heat of the oil cooler flows between the right and left shrouds due to travelling wind. Accordingly, the separation device is reasonably warmed.

In the saddle-riding vehicle according to the seventh aspect, the separation device can be inhibited from being protruded in the vehicle width direction. Accordingly, increase in size of the vehicle can be inhibited even when the separation device is embedded in the vehicle.

In the saddle-riding vehicle according to the eighth aspect, liquid alcohol can be inhibited from remaining in the blow-by gas path when the vehicle is tilted right or left in a situation such as parking.

In the saddle-riding vehicle according to the ninth aspect, alcohol evaporated in the separation device is returned to the engine through the air cleaner.

In the saddle-riding vehicle according to the tenth aspect, liquid alcohol can be inhibited from remaining in the blow-by gas path when the vehicle is tilted right or left in a situation such as parking.

### BRIEF DESCRIPTION OF THE DRAWINGS

FIG 1 is a side view of a saddle-riding vehicle according to an exemplary embodiment;
FIG 2 is a front view of the saddle-riding vehicle;
FIG. 3 is a side view of a structure of an engine and its surrounding in the saddle-riding vehicle;
FIG 4 is a top view of the structure of the engine and its surrounding;
FIG. 5 is a front view of an arrangement of an oil cooler and a separation device in the saddle-riding vehicle;
FIG 6 is a side view of a structure of a blow-by gas path in the saddle-riding vehicle;
FIG 7 is a top view of the structure of the blow-by gas path; and
FIG. 8 is a top view of a structure of an engine and its surrounding according to a modification.

### DETAILED DESCRIPTION OF THE EMBODIMENTS

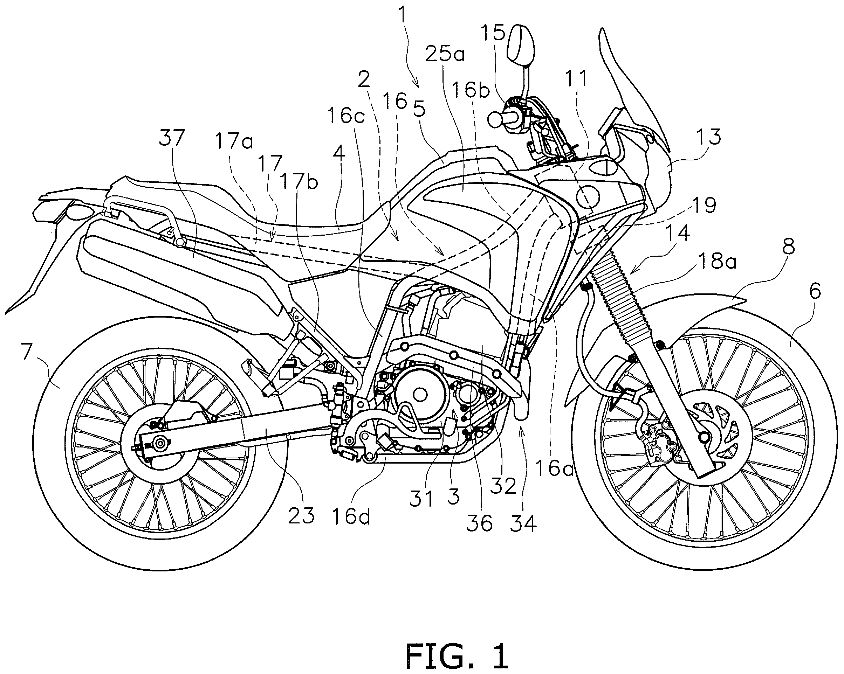

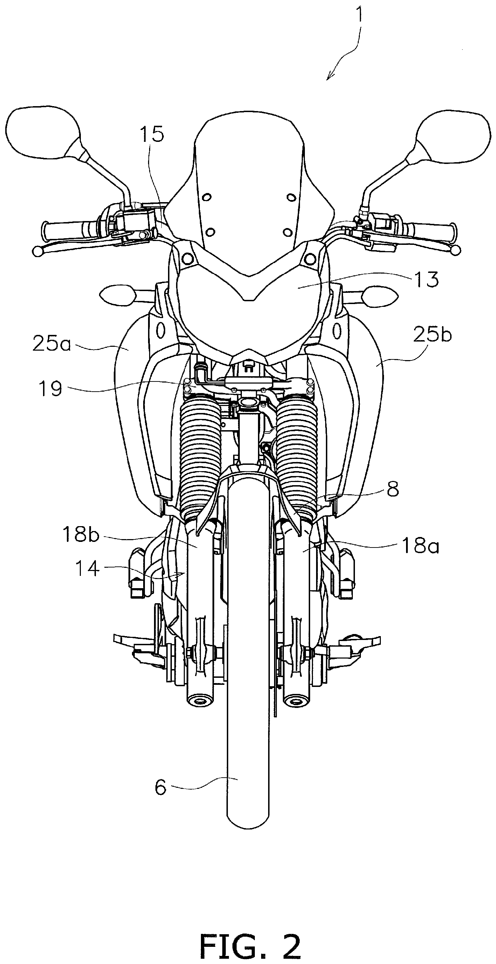

FIGS. 1 and 2 illustrate a saddle-riding vehicle 1 according to an exemplary embodiment. FIG. 1 is a side view of the saddle-riding vehicle 1. FIG 2 is a front view of the saddle-riding vehicle 1. It should be noted that in the following explanation, the terms "right" and "left" respectively mean corresponding directions seen from a rider riding on the saddle-riding vehicle 1. The term "side view" means a side view of the vehicle. The term "top view" means a top view of the vehicle. The saddle-riding vehicle 1 is a motorcycle. The saddle-riding vehicle 1 includes a vehicle body frame 2, an engine 3, a seat 4, a fuel tank 5, a front wheel 6 and a rear wheel 7.

The vehicle body frame 2 includes a head pipe 11, a front frame 16 and a rear frame 17. A front fork 14 is supported by the head pipe 11. A handle 15 is fixed to the upper end of the front fork 14. A headlight unit 13 is disposed forwards of the handle 15. As illustrated in FIG. 2, the front fork 14 includes a right and left pair of shock absorbers 18a and 18b and a bracket 19. The pair of shock absorbers 18a and 18b are disposed at an interval in a vehicle width direction. The front wheel 6 is rotatably supported by the lower end of the front fork 14. The right shock absorber 18b is disposed rightwards of the front wheel 6. The left shock absorber 18a is disposed leftwards of the front wheel 6. As illustrated in FIG 1, the front wheel 6 is positioned forwards of the engine 3. A front fender 8 is disposed above the front wheel 6. The bracket 19 supports the upper portions of the shock absorbers 18a and 18b.

The front frame 16 is provided by pipe-shaped members bent at a plurality of positions. The front frame 16 includes a first portion 16a, a second portion 16b, a third portion 16c and a fourth portion 16d. The first portion 16a is extended obliquely downwards and rearwards from the head pipe 11. The second portion 16b is connected to the head pipe 11 while being backwardly extended therefrom. The third portion 16c is extended obliquely rearwards and downwards from the rear end of the second portion 16b. The fourth portion 16d is backwardly extended from the lower end of the first portion 16a.

The rear frame 17 is provided by pipe-shaped members. The rear frame 17 is connected to the front frame 16 while being backwardly extended therefrom. The rear frame 17 includes an upper rear frame 17a and a lower rear frame 17b. The lower rear frame 17b is disposed below the upper rear frame 17a.

The seat 4 and the fuel tank 5 are attached to the upper portion of the vehicle body frame 2. The fuel tank 5 is disposed forwards of the seat 4. The fuel tank 5 is positioned above the engine 3. A swing arm 23 is coupled to the rear portion of the front frame 16, while being pivotable up and down. The rear wheel 7 is rotatably supported by the rear end of the swing arm 23.

As illustrated in FIG. 2, a right shroud 25a and a left shroud 25b are disposed on the both lateral sides of the front frame 16. The right shroud 25a and the left shroud 25b are disposed while being separated away from each other in the vehicle width direction. Specifically, the right shroud 25a is disposed rightwards of the front frame 16. The left shroud 25b is disposed leftwards of the front frame 16. Travelling wind is directed towards the engine 3 by means of the shrouds 25a and 25b. As illustrated in FIG. 1, the upper portion of the right shroud 25a is positioned laterally to the fuel tank 5. To direct travelling wind towards the engine, the right shroud 25a is provided with fins on the inner lateral surface thereof. The left shroud 25b includes a shape bilaterally symmetric to the right shroud 25a.

The engine 3 is a 4-stroke air-cooled engine, for instance, and is configured to transmit a driving force to the rear wheel 7 through a chain (not illustrated in the figures). The engine 3 is disposed below the fuel tank 5, while being supported by the front frame 16. The engine 3 includes a crankcase 31 and a cylinder 32. The crankcase 31 accommodates a crankshaft (not illustrated in the figures). The cylinder 32 is disposed above the crankcase 31. The cylinder 32 accommodates a piston (not illustrated in the figures) coupled to the crankshaft. An exhaust path 34 is connected to the cylinder 32.

The exhaust path 34 is a path that the exhaust gas flows therethrough after discharged from a combustion chamber provided inside the cylinder 32. The exhaust path 34 includes an exhaust pipe 36 and a muffler 37. The exhaust pipe 36 is connected to the front surface of the cylinder 32. The exhaust pipe 36 is folded back rearwards at a portion disposed forwards of the engine 3. The muffler 37 is connected to the rear portion of the exhaust pipe 36, while being disposed laterally to the rear wheel 7.

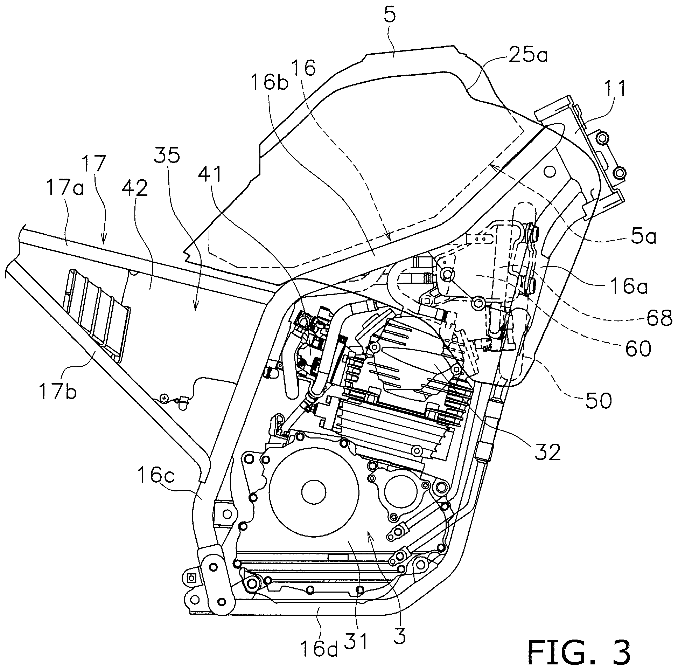

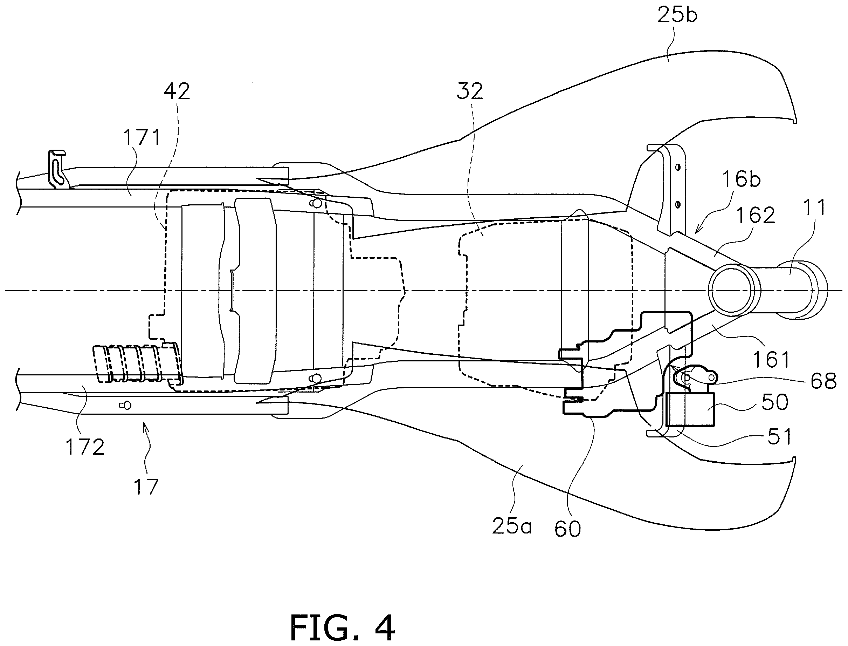

FIG. 3 is a side view of the engine 3 and the surrounding thereof. FIG. 4 is a top view of the engine 3 and the surrounding thereof. As illustrated in FIG. 3, an intake path 35 is connected to the cylinder 32. The intake path 35 is a path for supplying air to the combustion chamber provided inside the cylinder 32. The intake path 35 includes a throttle valve 41 and an air cleaner 42. The throttle valve 41 is configured to regulate the intake amount of the engine 3.

The air cleaner 42 is disposed rearwards of the cylinder 32. The air cleaner 42 is disposed below the seat 4. At least a portion of the air cleaner 42 is disposed between the upper rear frame 17a and the lower rear frame 17b. In a side view, at least a portion of the air cleaner 42 is overlapped with the upper rear frame 17a. In the side view, at least a portion of the air cleaner 42 is overlapped with the lower rear frame 17b. The air cleaner 42 is disposed below the seat 4. As illustrated in FIG. 4, the upper rear frame 17a includes a left rear frame 171 and a right rear frame 172. At least a portion of the air cleaner 42 is disposed between the left rear frame 171 and the right rear frame 172. In a top view, at least a portion of the air cleaner 42 is overlapped with the left rear frame 171. In the top view, at least a portion of the air cleaner 42 is overlapped with the right rear frame 172.

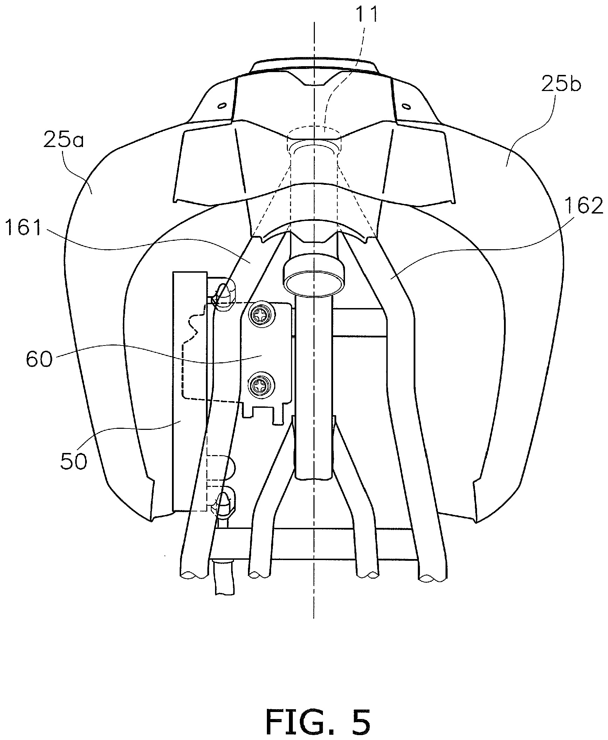

As illustrated in FIGS. 3 and 4, the saddle-riding vehicle 1 includes an oil cooler 50 and a separation device 60. FIG. 5 is a front-view diagram for illustrating the arrangement of the oil cooler 50 and the separation device 60. In a side view, the oil cooler 50 is disposed forwards of the engine 3. The oil cooler 50 includes a shape elongated with thin in an up-and-down direction. The lower end of the oil cooler 50 is disposed below the upper end of the cylinder 32. The upper end of the oil cooler 50 is disposed above that of the cylinder 32. As illustrated in FIG 4, the oil cooler 50 is disposed on the right of a vehicle center line extended in a back-and-forth direction.

As illustrated in FIG. 4, the first portion 16a of the front frame 16 includes a right front frame 161 and a left front frame 162. A first bracket 51 is attached to the right front frame 161. The first bracket 51 is protruded rightwards from the right front frame 161. The oil cooler 50 is attached to the first bracket 51.

The separation device 60 is a catch tank for separating evaporated alcohol. The separation device 60 is disposed in a blow-by gas path connecting the engine 3 and the intake path 35. The blow-by gas path will be described below.

As illustrated in FIG. 4, the separation device 60 is disposed on the right of the vehicle center line. As illustrated in FIG. 3, in a side view, at least a portion of the separation device 60 is disposed in such a position that it is overlapped with the engine 3 in the back-and-forth direction. In other words, in a side view, at least a portion of the separation device 60 is positioned between the front end portion and the rear end portion of the engine 3 in the back-and-forth direction. In a side view, at least a portion of the separation device 60 is positioned above the engine 3. In more detail, at least a portion of the separation device 60 is positioned above the cylinder 32 in a side view. As illustrated in FIG 4, at least a portion of the separation device 60 is disposed in such a position that it is overlapped with the cylinder 32 in a top view.

As illustrated in FIG 3, the bottom surface of the fuel tank 5 includes a slope 5a. The slope 5a is slanted obliquely upwards in a forward direction. At least a portion of the separation device 60 is disposed below the slope 5a. The separation device 60 is disposed rearwards of the right front frame 161. As illustrated in FIG. 5, the separation device 60 is overlapped with the right front frame 161 in a front view.

As illustrated in FIG. 3, the oil cooler 50 and the separation device 60 are disposed in positions overlapped with the shrouds 25a and 25b in a side view. As illustrated in FIG 5, the oil cooler 50 and the separation device 60 are disposed between the right shroud 25a and the left shroud 25b in the vehicle width direction. The right shroud 25a directs travelling wind to flow towards the engine 3 through the oil cooler 50 and the separation device 60.

In a side view, at least a portion of the separation device 60 is disposed in such a position that it is overlapped with the oil cooler 50. Specifically, as illustrated in FIG 4, the separation device 60 includes a recessed portion 68. A portion of the oil cooler 50 is disposed in opposition to the recessed portion 68. As illustrated in FIG 3, the oil cooler 50 is disposed while being overlapped with the recessed portion 68 in a side view. The recessed portion 68 is provided on the front portion of the right lateral surface of the separation device 60. A portion of the separation device 60, positioned rearwards of the recessed portion 68, is positioned rearwards of the oil cooler 50.

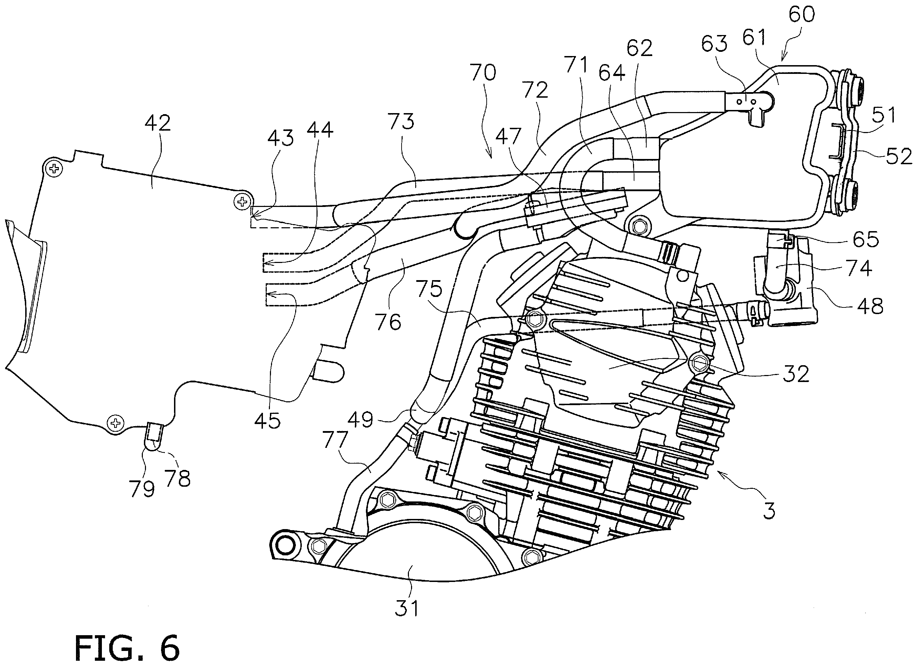

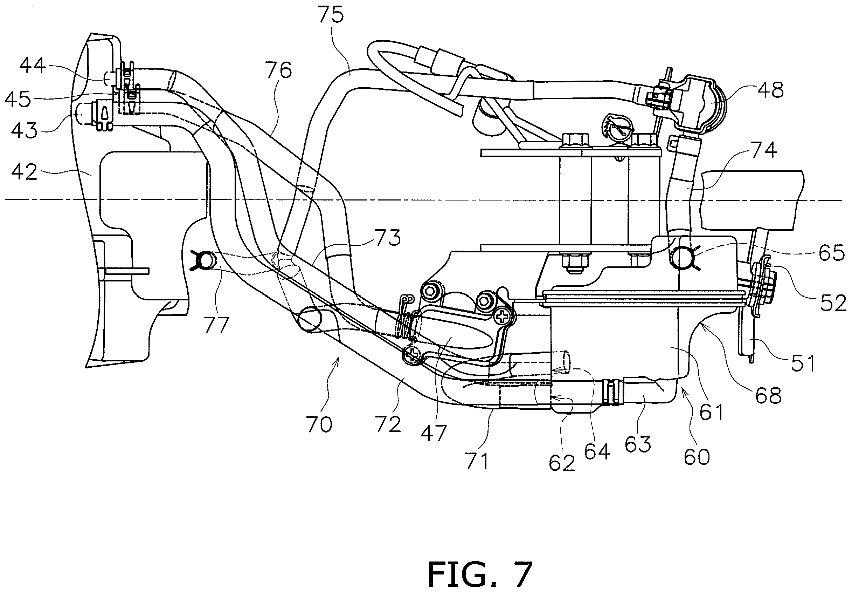

FIG. 6 is a side view of a structure of a blow-by gas path 70. FIG. 7 is a top view of the structure of the blow-by gas path 70. The blow-by gas path 70 includes a plurality of hoses to be connected to the separation device 60. As illustrated in FIGS. 6 and 7, the separation device 60 includes a tank main body 61, a first tank connection port 62, a second tank connection port 63, a third tank connection port 64 and a fourth tank connection port 65. The tank main body 61 is a member including a hollow space in the inside thereof.

The first tank connection port 62 is disposed on the rear surface of the tank main body 61. One end of a first hose 71 is connected to the first tank connection port 62. The other end of the first hose 71 is connected to the cylinder 32. The first hose 71 is communicated with the inside of the crankcase 31 through a cam chain chamber (not illustrated in the figures) disposed within the cylinder 32. The first hose 71 connects the engine 3 and the separation device 60. The first hose 71 is an example of a first blow-by gas path.

The second tank connection port 63 is positioned above the first tank connection port 62. One end of a second hose 72 is connected to the second tank connection port 63. The other end of the second hose 72 is connected to a first air cleaner connection port 43 of the air cleaner 42. The second hose 72 connects the inside of the separation device 60 and the intake path 35. The second hose 72 connects the separation device 60 and the air cleaner 42. The second hose 72 is an example of s second blow-by gas path. The second tank connection port 63 is an example of a first connection portion. The first air cleaner connection port 43 is an example of a second connection portion.

The third tank connection port 64 is positioned below the first tank connection port 62. The third tank connection port 64 is disposed on the rear surface of the tank main body 61. One end of a third hose 73 is connected to the third tank connection port 64. The other end of the third hose 73 is connected to a second air cleaner connection port 44 of the air cleaner 42. The second air cleaner connection port 44 is positioned below the first air cleaner connection port 43.

The fourth tank connection port 65 is positioned below the third tank connection port 64. The fourth tank connection port 65 is disposed on the bottom surface of the tank main body 61. The fourth tank connection port 65 is connected to a solenoid valve 48 through a fourth hose 74. The solenoid valve 48 is connected to a three-way pipe 49 through a fifth hose 75.

One end of a sixth hose 76 is connected to the three-way pipe 49. The other end of the sixth hose 76 is connected to a third air cleaner connection port 45 of the air cleaner 42. The third air cleaner connection port 45 is positioned below the second air cleaner connection port 44. The sixth hose 76 is provided with a reed valve 47. The reed valve 47 is configured to allow the flow from the air cleaner 42 to the engine 3 but is configured to prohibit the flow from the engine 3 to the air cleaner 42. Further, one end of a seventh hose 77 is connected to the three-way pipe 49. The other end of the seventh hose 77 is connected to the crankcase 31.

It should be noted that the separation device 60 is attached to the aforementioned first bracket 51 through a second bracket 52 as illustrated in FIG 6.

As illustrated in FIG. 7, the second tank connection port 63 is positioned rightwards of the vehicle center line. The first air cleaner connection port 43 is positioned leftwards of the vehicle center line. In a top view, the second hose 72 is thus disposed across the vehicle center line in the vehicle width direction.

The third tank connection port 64 is positioned rightwards of the vehicle center line. The second air cleaner connection port 44 is positioned leftwards of the vehicle center line. In a top view, the third hose 73 is thus disposed across the vehicle center line in the vehicle width direction.

Next, explanation will be made for a blow-by gas processing where a fuel containing alcohol is used in the saddle-riding vehicle 1. It should be noted that, unlike a lubricating oil, alcohol is characterized in its low boiling point and its high volatility. For example, the boiling point of ethanol is in a range of roughly 78 degrees Celsius to roughly 80 degrees Celsius.

First, when a fuel containing alcohol and gasoline flows from the combustion chamber of the engine 3 through the space between the piston and the cylinder 32 and reaches the inside of the crankcase 31, the alcohol and gasoline, contained in the fuel, are mixed with a lubricating oil contained within the crankcase 31. Further, when the temperature of the lubricating oil is increased by the operation of the engine 3 and reaches the boiling point of alcohol, the alcohol mixed with the lubricating oil evaporates. In this case, the amount of alcohol is much less than that of oil. Therefore, the amount of heat applied to alcohol by oil is much greater than the latent heat in evaporation of alcohol. Therefore, alcohol evaporates all at once due to the heat of oil.

The blow-by gas, containing such evaporated alcohol and gasoline, is transmitted to the inside of the separation device 60 from the inside of the crankcase 31 through the cam chain chamber disposed within the cylinder 32 and further through the first hose 71 and the first tank connection port 62. The alcohol and gasoline, contained in the blow-by gas, is partially condensed within the separation device 60 and is separated from the blow-by gas. The remaining alcohol is transmitted to the air cleaner 42 through the second tank connection port 63 and the second hose 72 while being kept contained in the blow-by gas together with gasoline. Then, the blow-by gas merges with the mixture gas and is supplied to the engine 3 through the intake path 35.

When the engine 3 is stopped, the solenoid valve 48 is opened. Accordingly, the liquid alcohol contained within the separation device 60 is transmitted from the fourth tank connection port 65 to the crankcase 31 through the fourth hose 74, the fifth hose 75, the three-way pipe 49 and the seventh hose 77.

A drain pipe 78 is disposed on the bottom portion of the air cleaner 42. A plug 79 is attached to the drain pipe 78. When the plug 79 is detached from the drain pipe 78, the liquid alcohol accumulated in the air cleaner 42 is discharged to the outside from the drain pipe 78.

The saddle-riding vehicle according to the present exemplary embodiment includes the following features.

The separation device 60 is disposed in the position susceptible to the heat from the engine 3 and the oil cooler 50. Therefore, in the normal operation, the temperature of the separation device 60 becomes a temperature closer to the boiling point of alcohol (e.g., roughly 80 degrees Celsius) by the heat from the engine 3 and the oil cooler 50. In this case, the amount of heat applied to the alcohol contained within the separation device 60 is much less than that in a condition that alcohol is mixed with oil. Therefore, even when reaching a boiling point, alcohol gradually evaporates without being acutely boiled by means of the latent heat in evaporation of alcohol. With such gradual evaporation of alcohol within the separation device 60, alcohol is transmitted to the air cleaner 42 little by little, and is supplied to the engine 3. Therefore, the remaining amount of liquid alcohol is reduced in the separation device 60 or the air cleaner 42. Consequently, the maintenance performance of the saddle-riding vehicle is enhanced.

Further, not only the liquid alcohol but also the engine oil exists within the separation device 60. The engine oil less easily evaporates compared to alcohol, and thereby remains in the separation device 60. As described above, the solenoid valve 48 is opened when the engine 3 is stopped. Accordingly, the engine oil remaining within the separation device 60 is returned to the crankcase 31 together with the liquid alcohol. In the separation device 60, the liquid alcohol partially evaporates, and therefore, the amount of alcohol mixed with the engine oil is reduced. Consequently, it is possible to inhibit deterioration of the engine oil attributed to alcohol.

A portion of the oil cooler 50 is disposed in opposition to the recessed portion 68 of the separation device 60. Therefore, the oil cooler 50 and the separation device 60 can be compactly disposed. Further, it is possible to increase the area of the portion that receives the heat from the oil cooler 50 in the separation device 60.

Travelling wind is directed by the right shroud 25a and flows through the separation device 60 after flowing through the oil cooler 50. Accordingly, the separation device 60 can be efficiently warmed by means of the heat of the oil cooler 50.

In a top view, at least a portion of the separation device 60 is disposed in such a position that it is overlapped with the engine 3. Therefore, the separation device 60 can be inhibited from being bulged in the vehicle width direction. Consequently, it is possible to inhibit increase in size of the vehicle attributed to installation of the separation device 60.

In a top view, the second hose 72 and the third hose 73 are respectively disposed across the vehicle center line in the vehicle width direction. Therefore, it is possible to inhibit liquid alcohol from remaining in the second hose 72 or the third hose 73 when the vehicle is tilted right or left in a situation such as parking.

An exemplary embodiment has been explained above. However, the present invention is not limited to the aforementioned exemplary embodiment, and a variety of changes can be made without departing from the scope of the present invention according to the claims.

The present invention may be applied to any other types of saddle-riding vehicles such as a snowmobile and an ATV (All Terrain Vehicle) without being limited to a motorcycle.

The separation device 60 and the oil cooler 50 may be disposed leftwards of the vehicle center line.

The separation device 60 may be disposed in such a position that it is entirely overlapped with the engine 3 in the back-and-forth direction. In other words, in a top view, the separation device 60 may be entirely overlapped with the engine 3 in the back-and-forth direction.

The separation device 60 may be entirely positioned above the engine 3. Alternatively, the separation device 60 may be entirely positioned above the cylinder 32.

In the aforementioned exemplary embodiment, the first hose 71 is connected to the cylinder 32. However, the first hose 71 may be connected to the crankcase 31.

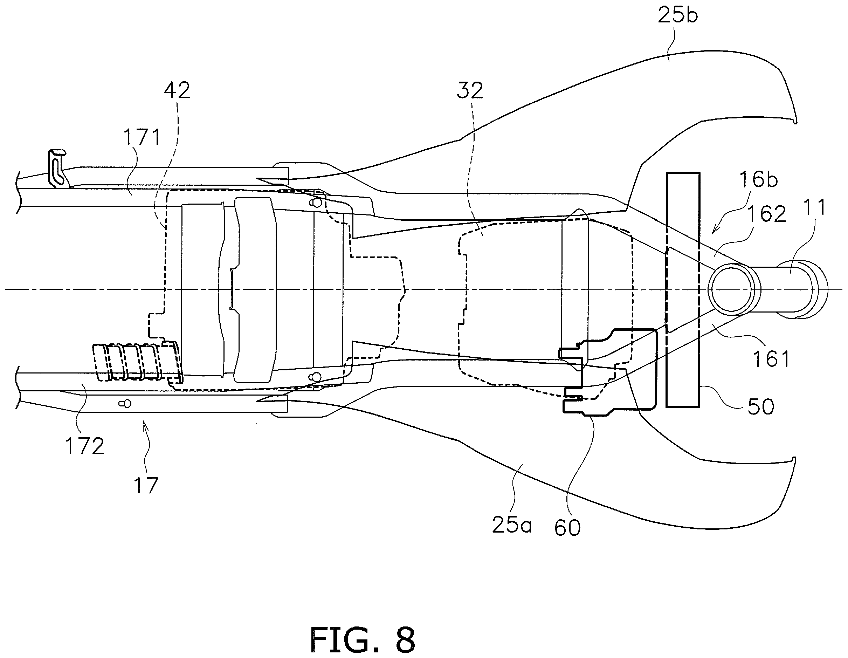

In the aforementioned exemplary embodiment, the oil cooler 50 is entirely disposed rightwards of the vehicle center line. However, as illustrated in FIG 8, the oil cooler 50 may be disposed across the vehicle center line in the vehicle width direction. In other words, the oil cooler 50 may be disposed while being overlapped with the vehicle center line.

In a side view, the separation device 60 may be disposed while being entirely overlapped with the oil cooler 50.

The solenoid valve 48 may not be provided. Even in such case, alcohol gradually evaporates in the separation device 60. Therefore, a good maintenance performance can be maintained. In other words, according to the present invention, a good maintenance performance can be maintained without providing a device for discharging liquid alcohol from a separation device.

## Claims

1. A saddle-riding vehicle, comprising:
an engine (3);
an oil cooler (50) disposed forwards of the engine (3) in a side view;
an intake path (35) connected to the engine (3);
a blow-by gas path (70) connecting the engine (3) and the intake path (35); and
a separation device (60) disposed in the blow-by gas path (70), wherein the separation device (60) is disposed outside the engine (3), and wherein the separation device (60) is a catch tank for separating evaporated alcohol,
wherein the separation device (60) is positioned laterally on one side of a vehicle center line extended in a back-and-forth direction, and
wherein at least a portion of the separation device (60) is positioned above the engine (3) in a side view,
**characterized in that**
at least a portion of the oil cooler (50) is positioned on the same side as the separation device (60) with respect to the vehicle center line,
in a side view, at least a portion of the separation device (60) is positioned between the front end portion and the rear end portion of the engine (3) in the back-and-forth direction, and
at least a portion of the separation device (60) is disposed in such a position that it is overlapped with a cylinder (32) of the engine (3) in a top view.

2. The saddle-riding vehicle according to claim 1,
wherein the engine (3) includes a crankcase (31) and the cylinder (32) is disposed above the crankcase (31), and
at least a portion of the separation device (60) is positioned above the cylinder (32) in a side view.

3. The saddle-riding vehicle according to claim 1 or 2, wherein at least a portion of the separation device (60) is disposed in such a position that at least a portion of the separation device (60) is overlapped with the oil cooler (50) in a side view.

4. The saddle-riding vehicle according to claim 3,
wherein the separation device (60) includes a recessed portion (68), and
a portion of the oil cooler (50) is disposed in opposition to the recessed portion (68).

5. The saddle-riding vehicle according to any of claims 1 to 4, further comprising:
a shroud (25a, 25b) for directing a travelling wind towards the engine (3),
wherein the oil cooler (50) and the separation device (60) are disposed in such positions that the oil cooler (50) and the separation device (60) are overlapped with the shroud (25a, 25b) in a side view.

6. The saddle-riding vehicle according to any of claims 1 to 4, further comprising:
a pair of right and left shrouds (25a, 25b) for directing a travelling wind towards the engine (3), the right and left shrouds (25a, 25b) disposed away from each other in a vehicle width direction, and
wherein the oil cooler (50) and the separation device (60) are disposed between the right shroud (25a) and the left shroud (25b) in the vehicle width direction.

7. The saddle-riding vehicle according to any of claims 1 to 6, wherein at least a portion of the separation device (60) is disposed in such a position that at least a portion of the separation device (60) is overlapped with the engine (3) in a top view.

8. The saddle-riding vehicle according to any of claims 1 to 7, wherein the blow-by gas path (70) is disposed vehicle-width-directionally across the vehicle center line in a top view.

9. The saddle-riding vehicle according to any of claims 1 to 8,
wherein the intake path (35) includes an air cleaner (42), and
the blow-by gas path (70) includes: a first blow-by gas path (71) connecting the engine (3) and the separation device (60); and a second blow-by gas path (72) connecting the separation device (60) and the air cleaner (42).

10. The saddle-riding vehicle according to claim 9,
wherein the second blow-by gas path (72) is connected to the separation device (60) at a first connection portion (63), the second blow-by gas path (72) being connected to the air cleaner (42) at a second connection portion (43),
the first connection portion (63) is positioned laterally on one side of the vehicle center line, and
the second connection portion (43) is positioned laterally on the other side of the vehicle center line.

## Patentansprüche

1. Ein Kraftfahrzeug, das im Sattel gefahren wird, das folgende Merkmale aufweist:
einen Motor (3);
einen Ölkühler (50), der in einer Seitenansicht weiter vorne als der Motor (3) angeordnet ist;
einen Einlassweg (35), der mit dem Motor (3) verbunden ist;
einen Kurbelgehäusegas-Weg (70), der den Motor (3) und den Einlassweg (35) verbindet; und
eine Trennvorrichtung (60), die in dem Kurbelgehäusegas-Weg (70) angeordnet ist, wobei die Trennvorrichtung (60) außerhalb des Motors (3) angeordnet ist und wobei die Trennvorrichtung (60) ein Auffangtank zum Trennen von verdampftem Alkohol ist,
wobei die Trennvorrichtung (60) lateral an einer Seite einer Fahrzeugmittellinie, die sich in einer Vorwärts-Rückwärts-Richtung erstreckt, positioniert ist und
wobei zumindest ein Abschnitt der Trennvorrichtung (60) in einer Seitenansicht oberhalb des Motors (3) positioniert ist,
**dadurch gekennzeichnet, dass**
zumindest ein Abschnitt des Ölkühlers (50) bezüglich der Fahrzeugmittellinie an derselben Seite wie die Trennvorrichtung (60) positioniert ist,
in einer Seitenansicht zumindest ein Abschnitt der Trennvorrichtung (60) in der Vorwärts-Rückwärts-Richtung zwischen dem vorderen Endabschnitt und dem hinteren Endabschnitt des Motors (3) positioniert ist und
zumindest ein Abschnitt der Trennvorrichtung (60) in einer derartigen Position angeordnet ist, dass derselbe in einer Draufsicht mit einem Zylinder (32) des Motors (3) überlappt.

2. Das Kraftfahrzeug, das im Sattel gefahren wird, gemäß Anspruch 1,
bei dem der Motor (3) ein Kurbelgehäuse (31) umfasst und der Zylinder (32) oberhalb des Kurbelgehäuses (31) angeordnet ist und
zumindest ein Abschnitt der Trennvorrichtung (60) in einer Seitenansicht oberhalb des Zylinders (32) positioniert ist.

3. Das Kraftfahrzeug, das im Sattel gefahren wird, gemäß Anspruch 1 oder 2, bei dem zumindest ein Abschnitt der Trennvorrichtung (60) in einer derartigen Position angeordnet ist, dass zumindest ein Abschnitt der Trennvorrichtung (60) in einer Seitenansicht mit dem Ölkühler (50) überlappt.

4. Das Kraftfahrzeug, das im Sattel gefahren wird, gemäß Anspruch 3,
bei dem die Trennvorrichtung (60) einen ausgenommenen Abschnitt (68) umfasst und
ein Abschnitt des Ölkühlers (50) gegenüber dem ausgenommenen Abschnitt (68) angeordnet ist.

5. Das Kraftfahrzeug, das im Sattel gefahren wird, gemäß einem der Ansprüche 1 bis 4, das ferner folgendes Merkmal aufweist:
eine Ummantelung (25a, 25b) zum Lenken eines Fortbewegungswinds zu dem Motor (3) hin,
wobei der Ölkühler (50) und die Trennvorrichtung (60) jeweils in einer derartigen Position angeordnet sind, dass der Ölkühler (50) und die Trennvorrichtung (60) in einer Seitenansicht mit der Ummantelung (25a, 25b) überlappt sind.

6. Das Kraftfahrzeug, das im Sattel gefahren wird, gemäß einem der Ansprüche 1 bis 4, das ferner folgendes Merkmal aufweist:
ein Paar aus einer rechten und einer linken Ummantelung (25a, 25b) zum Lenken eines Fortbewegungswinds zu dem Motor (3) hin, wobei die rechte und die linke Ummantelung (25a, 25b) in einer Fahrzeugbreitenrichtung voneinander weg angeordnet sind und
wobei der Ölkühler (50) und die Trennvorrichtung (60) in der Fahrzeugbreitenrichtung zwischen der rechten Ummantelung (25a) und der linken Ummantelung (25b) angeordnet sind.

7. Das Kraftfahrzeug, das im Sattel gefahren wird, gemäß einem der Ansprüche 1 bis 6, bei dem zumindest ein Abschnitt der Trennvorrichtung (60) in einer derartigen Position angeordnet ist, dass zumindest ein Abschnitt der Trennvorrichtung (60) in einer Draufsicht mit dem Motor (3) überlappt.

8. Das Kraftfahrzeug, das im Sattel gefahren wird, gemäß einem der Ansprüche 1 bis 7, bei dem der Kurbelgehäusegas-Weg (70) in einer Draufsicht hinsichtlich der Fahrzeugbreitenrichtung über die Fahrzeugmittellinie hinweg angeordnet ist.

9. Das Kraftfahrzeug, das im Sattel gefahren wird, gemäß einem der Ansprüche 1 bis 8,
bei dem der Einlassweg (35) einen Luftreiniger (42) umfasst und
der Kurbelgehäusegas-Weg (70) folgende Merkmale umfasst: einen ersten Kurbelgehäusegas-Weg (71), der den Motor (3) und die Trennvorrichtung (60) verbindet; und einen zweiten Kurbelgehäusegas-Weg (72), der die Trennvorrichtung (60) und den Luftreiniger (42) verbindet.

10. Das Kraftfahrzeug, das im Sattel gefahren wird, gemäß Anspruch 9,
bei dem der zweite Kurbelgehäusegas-Weg (72) an einem ersten Verbindungsabschnitt (63) mit der Trennvorrichtung (60) verbunden ist, der zweite Kurbelgehäusegas-Weg (72) an einem zweiten Verbindungsabschnitt (43) mit dem Luftreiniger (42) verbunden ist,
bei dem der erste Verbindungsabschnitt (63) lateral an einer Seite der Fahrzeugmittellinie positioniert ist und
der zweite Verbindungsabschnitt (43) lateral an der anderen Seite der Fahrzeugmittellinie positioniert ist.

## Revendications

1. Véhicule à selle, comprenant:
un moteur (3);
un refroidisseur d'huile (50) disposé en avant du moteur (3) en vue de côté;
un trajet d'admission (35) connecté au moteur (3);
un trajet de gaz de fuite (70) connectant le moteur (3) et le trajet d'admission (35); et
un dispositif de séparation (60) disposé dans le trajet de gaz de fuite (70), où le dispositif de séparation (60) est disposé à l'extérieur du moteur (3), et où le dispositif de séparation (60) est un réservoir de capture destiné à séparer l'alcool évaporé,
dans lequel le dispositif de séparation (60) est positionné latéralement d'un côté d'une ligne centrale du véhicule s'étendant dans une direction arrière et avant, et
dans lequel au moins une partie du dispositif de séparation (60) est positionnée au-dessus du moteur (3), en vue de côté,
**caractérisé par le fait que**
au moins une partie du refroidisseur d'huile (50) est positionnée du même côté que le dispositif de séparation (60) par rapport à la ligne centrale du véhicule,
en vue de côté, au moins une partie du dispositif de séparation (60) est positionnée entre la partie d'extrémité avant et la partie d'extrémité arrière du moteur (3), dans la direction avant et arrière, et
au moins une partie du dispositif de séparation (60) est disposée dans une position telle qu'avec elle vienne en recouvrement un cylindre (32) du moteur (3), en vue de dessus.

2. Véhicule à selle selon la revendication 1,
dans lequel le moteur (3) comporte un carter de moteur (31) et le cylindre (32) est disposé au-dessus du carter de moteur (31), et
au moins une partie du dispositif de séparation (60) est positionnée au-dessus du cylindre (32), en vue de côté.

3. Véhicule à selle selon la revendication 1 ou 2, dans lequel au moins une partie du dispositif de séparation (60) est disposée en une position telle qu'avec au moins une partie du dispositif de séparation (60) vienne en recouvrement le refroidisseur d'huile (50), en vue de côté.

4. Véhicule à selle selon la revendication 3,
dans lequel le dispositif de séparation (60) comporte une partie évidée (68), et
une partie du refroidisseur d'huile (50) est disposée opposée à la partie évidée (68).

5. Véhicule à selle selon l'une quelconque des revendications 1 à 4, comprenant par ailleurs:
un carénage (25a, 25b) destiné à diriger un vent de déplacement vers le moteur (3),
dans lequel le refroidisseur d'huile (50) et le dispositif de séparation (60) sont disposés en des positions telles qu'avec le refroidisseur d'huile (50) et le dispositif de séparation (60) vienne en recouvrement le carénage (25a, 25b), en vue de côté.

6. Véhicule à selle selon l'une quelconque des revendications 1 à 4, comprenant par ailleurs:
une paire de carénages droit et gauche (25a, 25b) destinés à diriger un vent de déplacement vers le moteur (3), les carénages droit et gauche (25a, 25b) étant disposés éloignés l'un de l'autre, dans une direction de la largeur du véhicule, et
dans lequel le refroidisseur d'huile (50) et le dispositif de séparation (60) sont disposés entre le carénage droit (25a) et le carénage gauche (25b), dans le sens de la largeur du véhicule.

7. Véhicule à selle selon l'une quelconque des revendications 1 à 6, dans lequel au moins une partie du dispositif de séparation (60) est disposée dans une position telle qu'avec au moins une partie du dispositif de séparation (60) vienne en recouvrement le moteur (3), en vue de dessus.

8. Véhicule à selle selon l'une quelconque des revendications 1 à 7, dans lequel le trajet de gaz de fuite (70) est disposé transversalement dans la direction de la largeur du véhicule sur toute la ligne centrale de véhicule, en vue de dessus.

9. Véhicule à selle selon l'une quelconque des revendications 1 à 8,
dans lequel le trajet d'admission (35) comporte un filtre à air (42), et
le trajet de gaz de fuite (70) comporte: un premier trajet de gaz de fuite (71) connectant le moteur (3) et le dispositif de séparation (60); et un deuxième trajet de gaz de fuite (72) connectant le dispositif de séparation (60) et le filtre à air (42).

10. Véhicule à selle selon la revendication 9,
dans lequel le deuxième trajet de gaz de fuite (72) est connecté au dispositif de séparation (60) au niveau d'une première partie de connexion (63), le deuxième trajet de gaz de fuite (72) étant connecté au filtre à air (42) au niveau d'une deuxième partie de connexion (43),
la première partie de connexion (63) est positionnée latéralement d'un côté de la ligne centrale du véhicule, et
la deuxième partie de connexion (43) est positionnée latéralement de l'autre côté de la ligne centrale du véhicule.
